# EUROPÄISCHE PATENTSCHRIFT

(11) **EP 2 601 471 B1**
(45) Veröffentlichungstag und Bekanntmachung des Hinweises auf die Patenterteilung: **30.04.2014**
(21) Anmeldenummer: 11757678.5
(22) Anmeldetag: 20.07.2011
(51) Int. Cl.: F27B 7/32, F27D 3/00, B65G 53/46, F23G 5/44, F23K 3/18, F23B 40/02, C04B 7/24, C04B 7/44

(54) **VORRICHTUNG ZUM EINBRINGEN VON ABFALLSTOFFEN UND/ODER ALTERNATIVEN BRENNSTOFFEN IN EINE KLINKERHERSTELLUNGSANLAGE**
APPARATUS FOR INTRODUCING WASTE MATERIALS AND/OR ALTERNATIVE FUELS INTO A CLINKER PRODUCTION PLANT
DISPOSITIF D'INTRODUCTION DE DÉCHETS ET/OU DE COMBUSTIBLES ALTERNATIFS DANS UNE INSTALLATION DE PRODUCTION DE CLINKER

(30) Priorität: 02.08.2010 AT 12912010
(43) Veröffentlichungstag der Anmeldung: 12.06.2013
(73) Patentinhaber: Holcim Technology Ltd., 8645 Rapperswil-Jona (CH)
(72) Erfinder: MOLINA, Ricardo, Mendoza (AR) (AR)
(74) Vertreter: Keschmann, Marc
(86) Internationale Anmeldenummer: PCT/IB2011/001699
(87) Internationale Veröffentlichungsnummer: WO 2012/017281

(56) Entgegenhaltungen:
- WO-A2-2008/047213

## Beschreibung

Die Erfindung betrifft eine Vorrichtung zum Einbringen von Abfallstoffen und/oder alternativen Brennstoffen in eine Klinkerherstellungsanlage, die Vorrichtung umfassend ein rohrförmiges Gehäuse mit einem zur Rohrachse im wesentlichen konzentrisch rotierbar gelagerten und zur Rotation antreibbaren Rotor mit einer Mehrzahl von auf dem Umfang des Rotors angeordneten Schlagelementen, wobei an das Gehäuse wenigstens eine Leitung für die Zufuhr der Abfallstoffe und/oder alternativen Brennstoffe und eine Austragsöffnung quer zur Rotationsachse des Rotors anschließt.

Abfallstoffe und alternative Brennstoffe fallen üblicherweise in unterschiedlichen Aggregatszuständen und unterschiedlichen Zusammensetzungen an. Beispielsweise ist es bekannt, Altreifen durch entsprechende Fördereinrichtungen an eine entsprechende Aufgabestelle an einem Drehrohrofen einer Klinkerherstellungsanlage zu fördern, wobei die entsprechenden Anlagenteile den Dimensionen von Altreifen sowie den jeweils sinnvoller Weise zuzuführenden Massen derartiger Altstoffe angepasst sein müssen. Unterschiedliche Feststoffe, welche zumeist in unterschiedlichen Formgebungen vorliegen, erfordern entweder eine speziell an die Formgebung angepasste Förder- und Zufuhreinrichtung oder aber eine entsprechende zerkleinerung des Materials, um dieses als Schüttgut an eine entsprechende Aufgabestelle zu verbringen. Im Fall von mechanisch zerkleinerten Feststoffen schwankt allerdings die chemische Zusammensetzung des zerkleinerten Rohmaterials relativ stark in Abhängigkeit von unterschiedlichen Abfallstoffen bzw. unterschiedlichen alternativen Brennstoffmaterialien.

Eine Vereinheitlichung der entsprechenden Förder- und Zuführeinrichtungen lässt sich prinzipiell dadurch erzielen, dass die Ausgangsmaterialien in eine einheitliche Form bzw. einen einheitlichen Aggregatszustand gebracht werden. Prinzipiell können beispielsweise alternative Brennstoffe in gesonderten Reaktoren verbrannt oder vergast werden, sodass in der Folge die gewünschte Energie in Form von gasförmigen Stoffen zur Verfügung steht, welche an geeigneter Stelle in das Klinkerherstellungsverfahren eingebracht werden können. Flüssig anfallende Abfallstoffe können in geeigneter Weise über Düsen eingedüst werden. Der überwiegend größere Teil von Abfallstoffen ist aber in aller Regel nicht unmittelbar in der Klinkerherstellung einsetzbar, wenn nicht zuvor aufwändige Vorbehandlungen vorgenommen werden.

Im Stand der Technik sind Verfahren und Vorrichtungen zur Zerkleinerung und Homogenisierung von derartigen Abfallstoffen bekannt geworden, wobei die Zerkleinerung und Homogenisierung der Abfallstoffe dazu führt, dass die Abfallstoffe feinteilig in Hochtemperaturprozesse eingebracht und dort thermisch verwertet werden können. Aus der WO 2008/047213 A2 ist beispielsweise ein Verfahren und eine Vorrichtung zum Einbringen von Abfallstoffen bzw. alternativen Brennstoffen in ein Klinkerherstellungsverfahren bekannt geworden, bei welchem die Abfall- bzw. Rohstoffe als Schlämme oder in aufgeschlämmter Form als pumpfähige Masse einer mechanischen Desagglomerierung unterworfen werden. Die Desagglomerierung erfolgt hierbei in einer Vorrichtung, bestehend aus einem Gehäuse und einem darin angeordneten Rotor mit Schlagleisten. Die aufgeschlämmten Abfallstoffe werden dem schnell rotierenden Rotor zugeführt, wobei eine hohe kinetische Energie durch die Schlagleisten auf die Abfallstoffe eingebracht wird, sodass eine mechanische Zerkleinerung und eine Förderung der Abfallstoffe in einen Hochtemperaturbereich einer Klinkerherstellungsanlage erfolgt.

Obwohl mit dem Verfahren und der Vorrichtung gemäß der WO 2008/047213 A2 gute Ergebnisse erzielt wurden, ist es dennoch wünschenswert, eine noch vollständigere Zerkleinerung und Homogenisierung der Abfallstoffe zu erreichen, um ein schnelleres und vollständiges Verbrennen und Veraschen der Abfallstoffe im Klinkerherstellungsverfahren zu garantieren. Die vorliegende Erfindung zielt daher darauf ab, ausgehend von dem genannten Stand der Technik, die Desagglomerierung grobstückiger Abfallstoffe weiter zu verbessern, wobei nötigenfalls zusätzlich Sauerstoff zugeführt werden kann, sodass eine kleinere Korngröße und damit ein kontrollierterer Abbrand der Abfallstoffe bzw. der alternativen Brennstoffe sichergestellt ist.

Zur Lösung dieser Aufgabe ist eine Vorrichtung der eingangs genannten Art umfassend ein rohrförmiges Gehäuse mit einem zur Rohrachse im wesentlichen konzentrisch rotierbar gelagerten und zur Rotation antreibbaren Rotor mit einer Mehrzahl von auf dem Umfang des Rotors angeordneten Schlagelementen, wobei an das Gehäuse wenigstens eine Leitung für die Zufuhr der Abfallstoffe und/oder alternativen Brennstoffe und eine Austragsöffnung quer zur Rotationsachse des Rotors anschließt, erfindungsgemäß dahingehend weitergebildet, dass die Schlagelemente als Reihen von Drähten ausgebildet sind. Dadurch, dass die Schlagelemente als Reihen von Drähten ausgebildet sind, wird zusätzlich zu dem schlagenden Effekt, der mit den Schlagleisten, wie sie aus dem genannten Stand der Technik bekannt sind, erreicht wird, eine spanende bzw. sägende Wirkung der in gewissen Grenzen flexiblen Drähte auf die eingebrachten Abfallstoffe bzw. alternativen Brennstoffe ausgeübt, sodass neben der Zerteilung grober Stücke in den Abfallstoffen die Bildung einer Art Sägemehl der festen Fraktion unterstützt wird, woraus eine besonders feinteilige und homogene und somit besonders gleichmäßig abbrennende feste Fraktion in das Klinkerherstellungsverfahren bzw. in die Klinkerherstellungsanlaqe eingestoßen werden kann. Es kommen dabei nur einfach bauende und nur gering wartungsanfällige Einrichtungen zum Einsatz, sodass die Vorrichtung einfach und kostengünstig hergestellt werden kann und sich durch eine lange und wartungsarme Betriebsdauer auszeichnet. Zusätzlich bilden die Reihen von Drähten auf dem Umfang des Rotors eine Art Bürste, wobei die radiale Erstreckung der Drähte im Wesentlichen bis an den Innenumfang bzw. die Innenwand des Gehäuses reicht, sodass die Förderung von festen und flüssigen Fraktionen der Abfallstoffe bzw. alternativen Brennstoffe über den Innenumfang des Gehäuses effektiv erfolgt, und es zu keiner nennenswerten Bildung von Anbackungen im Gehäuse kommt.

Prinzipiell können die Reihen von Drähten in jeder nur erdenklichen Form am Umfang des Rotors angeordnet sein, wobei in diesem Zusammenhang helikale oder pfeilförmige Geometrien der Reihen von Drähten denkbar sind. Bevorzugt ist die erfindungsgemäße Vorrichtung jedoch dahingehend weitergebildet, dass die Schlagelemente als sich parallel zur Rotationsachse des Rotors erstreckende Reihen von Drähten ausgebildet sind, was zum einen eine effektive Zerkleinerung und Homogenisierung der eingebrachten Abfallstoffe bzw. alternativen Brennstoffe gewährleistet und andererseits eine besonders einfache Form der Festlegung der Drähte in Reihen auf dem Umfang des Rotors gestattet.

Mit Vorteil ist die Vorrichtung gemäß der vorliegenden Erfindung dahingehend weitergebildet, dass die Drähte einer Reihe direkt aneinander angrenzend angeordnet sind, sodass die Drähte einer Reihe einander berühren und dadurch gegenseitig stützen, sodass eine ausreichende Stabilität der Reihe, die neben dem sägenden Effekt ja auch eine schlagende Wirkung haben soll, resultiert.

Um einen möglichst vehementen Krafteintrag bzw. eine besonders starke Beschleunigung der Feststoffkomponenten der eingesetzten Abfallstoffe bzw. alternativen Brennstoffe beim Aufprall auf die Drähte zu gewährleisten, ist die Vorrichtung gemäß der vorliegenden Erfindung bevorzugt dahingehend weitergebildet, dass die Drähte eine identische radiale Erstreckung vom Umfang des Rotors aufweisen, sodass die Spitzen der einzelnen Drähte eine mehr oder weniger geradlinige Oberfläche ausbilden, sodass die aufgrund der Rotation des Rotors auftreffenden Feststoffteile nicht bereits durch einzelne vorstehende Drähte beschleunigt werden, wodurch die Heftigkeit des Aufpralls und somit die Zerkleinerungswirkung verringert würde.

Wenn, wie dies einer bevorzugten Ausführungsform der erfindungsgemäßen Vorrichtung entspricht, die Drähte in einem von der Richtung des Radius des Rotors abweichenden Winkel am Umfang des Rotors angeordnet sind, so kann auf diese Weise die Vielzahl der Reihen von Drähten, die auf dem Umfang des Rotors angeordnet ist, bei Rotation des Rotors eine Art Säge bilden, wobei der Neigungswinkel der einzelnen Reihen aus der Normalen zur Radiusrichtung den Freiwinkel der gedachten Säge bildet.

Bevorzugt ist die Vorrichtung hierbei dahingehend weitergebildet, dass der Neigungswinkel der Drähte zwischen 5° und 15° in Rotationsrichtung gewählt ist.

Je nach Festigkeit der festen Fraktion der eingesetzten Abfallstoffe bzw. alternativen Brennstoffe, nach dem Material, aus dem die Drähte der einzelnen Reihen gebildet sind und nach der Größe der Vorrichtung müssen die Drähte einen gewissen Durchmesser aufweisen, um eine entsprechende Steifigkeit gegenüber den eingebrachten Stoffen aufzuweisen. Bevorzugt ist die Vorrichtung daher dahingehend weitergebildet, dass der Durchmesser der Drähte zwischen 1 mm und 10 mm gewählt ist.

In bevorzugter Weise ist die erfindungsgemäße Vorrichtung dahingehend weitergebildet, dass die Drähte an ihren freien Enden geschärft ausgebildet sind, wenn das zu zerkleinernde Material dies erfordert. Mit dieser Maßnahme wird der sägende Effekt verstärkt.

An sich ist es bei der Verwendung der erfindungsgemäßen Vorrichtung vorgesehen, die Abfallstoffe, die in pumpfähiger aufgeschlämmter Form vorliegen, ohne die Vermischung mit anderen Medien direkt dem Rotor und damit den Schlagelementen zuzuführen. Unter Umständen kann es jedoch sinnvoll sein, die aufgeschlämmten Abfallstoffe bzw. alternativen Brennstoffe mit gasförmigen Medien zu versetzen, um eine leichtere Konsistenz der Abfallstoffe zu erreichen. Darüber hinaus kann es nach längerer Betriebszeit sinnvoll sein, den Rotor und das Gehäuse des Rotors beispielsweise mit Wasser zu spülen, um über die zeit angelagerte Verunreinigungen zu beseitigen. Mit Vorteil ist die erfindungsgemäße Vorrichtung daher dahingehend weitergebildet, dass an das Gehäuse zusätzliche Öffnungen für den Eintrag von Reinigungsflüssigkeiten oder gasförmigen Medien anschließen.

Um die Betriebssicherheit der erfindungsgemäßen Vorrichtung jederzeit sicherzustellen, und die Sicherheit auch bei möglicherweise auftretenden Stromausfällen garantieren zu können, ist die erfindungsgemäße Vorrichtung gemäß einer bevorzugten Ausführungsform dahingehend weitergebildet, dass die an das Gehäuse anschließenden Leitungen mittels pneumatischer Ventile verschließbar sind.

Im Betrieb einer Klinkerherstellungsanlage bzw. eines Klinkerherstellungsverfahrens kann es wünschenswert sein, alternative Brennstoffe intermittierend oder je nach ihrer Verfügbarkeit zuzuführen. Bei Stillstand der erfindungsgemäßen Vorrichtung erfolgt klarerweise keine Kühlung durch die zugeführten Abfallstoffe bzw. alternativen Brennstoffe. Daher ist es gemäß einer bevorzugten Ausführungsform der vorliegenden Erfindung vorgesehen, dass die Austragsöffnung mittels eines verschiebbaren Verschlussglieds verschließbar ist. Wenn die erfindungsgemäße Vorrichtung außer Betrieb genommen wird, wird das Verschlussglied in die Verschlussposition gefahren, sodass die Austragsöffnung und damit jene Öffnung, die mit dem heißen Innenraum der Klinkerherstellungsanlage in Verbindung steht, verschlossen ist, sodass die Vorrichtung vor der Hitze im Inneren der Klinkerherstellungsanlage geschützt ist.

Um eine ausreichend gründliche Desagglomerierung und Homogenisierung der mitunter äußerst festen und zähen Abfallstoffe, unter denen sich beispielsweise auch Autoreifen befinden können, zu erreichen, ist eine nicht unerhebliche kinetische Energie notwendig, die auf die Abfallstoffe übertragen werden muss. Die Vorrichtung ist daher mit Vorteil dahingehend weitergebildet, dass der Rotor zu Drehzahlen von 300-1500 Umin⁻¹, bevorzugt 500-1000 Umin⁻¹ und insbesondere bevorzugt 700 Umin⁻¹ antreibbar ist.

Grundsätzlich ist es beim Betrieb der erfindungsgemäßen Vorrichtung vorgesehen, dass eine kleine Menge Luft durch eine Öffnung in die Vorrichtung gelangen kann, um durch Mischen mit den desagglomerierten und homogenisierten Abfallstoffen und/oder alternativen Brennstoffen die Verbrennung derselben zu verbessern. Zu diesem Zweck ist die erfindungsgemäße Vorrichtung bevorzugt dahingehend weitergebildet, dass der Rotor (4) innen oder seitlich angeordnete Flügel zum Ansaugen von Luft durch zumindest eine im Gehäuse angeordnete Öffnung aufweist.

Die Erfindung ist hierbei dahingehend weitergebildet, dass die Menge der angesaugten Luft mit einem Einlassregler einstellbar ist.

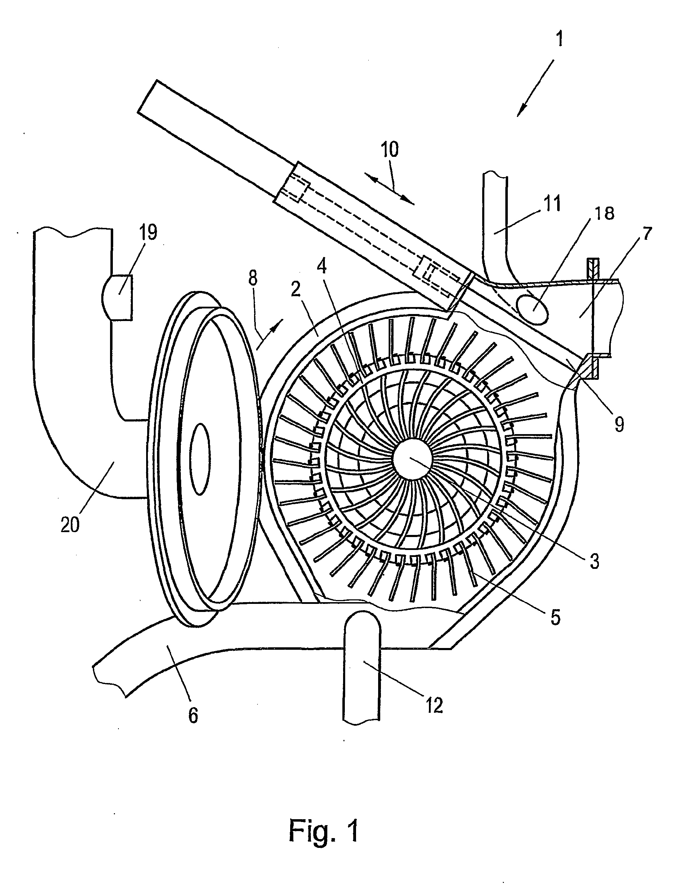

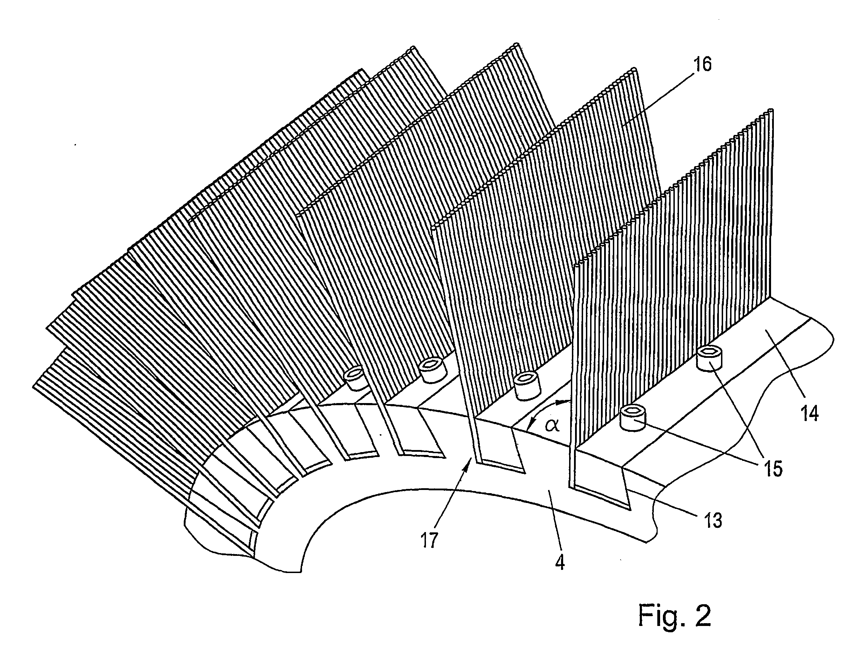

Die Erfindung wird nachfolgend anhand eines in der Zeichnung schematisch dargestellten Ausführungsbeispiels näher erläutert. In dieser zeigen Fig. 1 eine Darstellung der erfindungsgemäßen Vorrichtung von der Seite mit geöffnetem Deckel und Fig. 2 eine perspektivische Ansicht auf die die Schlagelemente bildenden Reihen von Drähten.

In Fig. 1 ist mit 1 eine Vorrichtung zum Einbringen von Abfallstoffen gemäß der vorliegenden Erfindung dargestellt. Die Vorrichtung 1 umfasst ein Gehäuse 2 mit einem zur Rohrachse bzw. Rotationsachse 3 konzentrisch gelagerten Rotor 4, an dessen Umfang eine Mehrzahl von Schlagelementen 5 angeordnet ist. An das Gehäuse 2 ist eine Mehrzahl von Leitungen bzw. Öffnungen angeschlossen, wobei eine Leitung zum Zuführen von Abfallstoffen bzw. alternativen Brennstoffen mit 6 und eine Austragsöffnung zum Austragen der desagglomerierten und homogenisierten Abfallstoffe in das Klinkerherstellungsverfahren bzw. in die Klinkerherstellungsanlage mit 7 bezeichnet sind. Darüber hinaus mündet eine Leitung 20 für den Zutritt von Luft in einen seitlichen Deckel des Gehäuses, wobei die Menge der durch die Leitung 20 geführten Luft mittels eines nicht näher dargestellten Einlassreglers 19 in der Leitung 20 einstellbar ist. In Betrieb rotiert der Rotor 4 in Richtung des Pfeils 8, sodass die durch die Leitung 6 zum Rotor 4 geförderten Abfallstoffe bzw. alternativen Brennstoffe von den Schlagelementen 5 getroffen werden, wobei eine Desagglomerierung und Homogenisierung der Abfallstoffe erfolgt, und wodurch die so vorbehandelten Stoffe in Richtung der Austragsöffnung 7 gefördert werden. Mit 9 ist ein verschiebbares Verschlussglied bezeichnet, welches in Richtung des Doppelpfeils 10 verschoben werden kann, sodass die Austragsöffnung 7 gegenüber dem Inneren der Klinkerherstellungsanlage abgetrennt werden kann. Mit 11 ist eine Zuführleitung für gasförmige Medien bezeichnet, sodass die im Bereich der Austragsöffnung 7 austretenden desagglomerierten und homogenisierten Stoffe, die diesen Bereich verstopfen können, zusätzlich der Scherwirkung eines reinigenden Gasstroms ausgesetzt werden können. An das Gehäuse 2 ist eine Mehrzahl von Öffnungen bzw. Leitungen 18 angeschlossen, die zur Reinigung der Austragsöffnung 7 mit dieser verbunden ist. Zur Durchführung von allenfalls notwendigen Wartungs- und Reinigungsarbeiten ist an das Gehäuse im Einlassbereich der Leitung 6 eine zusätzliche Leitung 12 angeordnet, über welche Reinigungsflüssigkeiten und insbesondere Wasser zu- und abgeführt werden können, um hartnäckige Ablagerungen zu entfernen.

In Fig. 2 sind nun die die Schlagelemente bildenden Reihen von Drähten sowie deren Festlegung am Umfang des Rotors 4 näher dargestellt. Am Umfang des Rotors 4 sind Nuten 13 eingelassen, welchen Befestigungselemente 14 mit Hilfe von Schrauben 15 festgelegt werden können. Die Dimensionen der Nuten 13 und Festlegungselemente 14 sind hierbei so gewählt, dass die einen gewissen Durchmesser aufweisenden Drähte 16 eingepasst und durch Anziehen der Schrauben 15 festgelegt werden können. Die Drähte 16 weisen im Wesentlichen eine identische radiale Erstreckung vom Umfang des Rotors 4 auf, sodass sie eine im Wesentlichen gerade Schlagoberfläche bilden, um einen größtmöglichen Impuls auf die zu desagglomerierenden Abfallstoffe bzw. alternativen Brennstoffe auszuüben. Der Neigungswinkel α der Reihen 17 der Drähte 16 kann beispielsweise über den Neigungswinkel der trapezförmigen Nuten 13 und der Festlegungselemente 14 bestimmt werden.

## Patentansprüche

1. Vorrichtung zum Einbringen von Abfallstoffen und/oder alternativen Brennstoffen in eine Klinkerherstellungsanlage, die Vorrichtung umfassend ein rohrförmiges Gehäuse (2) mit einem zur Rohrachse (3) im wesentlichen konzentrisch rotierbar gelagerten und zur Rotation antreibbaren Rotor (4) mit einer Mehrzahl von auf dem Umfang des Rotors (4) angeordneten Schlagelementen (5), wobei an das Gehäuse (2) wenigstens eine Leitung (6) für die Zufuhr der Abfallstoffe und/oder alternativen Brennstoffe und eine Austragsöffnung quer zur Rotationsachse (3) des Rotors (4) anschließt, **dadurch gekennzeichnet, dass** die Schlagelemente (5) als Reihen (17) von Drähten (16) ausgebildet sind.

2. Vorrichtung nach Anspruch 1, **dadurch gekennzeichnet, dass** die Schlagelemente als sich parallel zur Rotationsachse (3) des Rotors (4) erstreckende Reihen (17) von Drähten (16) ausgebildet sind.

3. Vorrichtung nach Anspruch 1 oder 2, **dadurch gekennzeichnet, dass** die Drähte (16) einer Reihe (17) direkt aneinander angrenzend angeordnet sind.

4. Vorrichtung nach Anspruch 1, 2 oder 3, **dadurch gekennzeichnet, dass** die Drähte (16) eine identische radiale Erstreckung vom Umfang des Rotors (4) aufweisen.

5. Vorrichtung nach einem der Ansprüche 1 bis 4, **dadurch gekennzeichnet, dass** die Drähte (16) in einem von der Richtung des Radius des Rotors (4) abweichenden Winkel am Umfang des Rotors (4) angeordnet sind.

6. Vorrichtung nach einem der Ansprüche 1 bis 5, **dadurch gekennzeichnet, dass** der Neigungswinkel der Drähte (16) zwischen 5° und 15° in Rotationsrichtung gewählt ist.

7. Vorrichtung nach einem der Ansprüche 1 bis 6, **dadurch gekennzeichnet, dass** der Durchmesser der Drähte (16) zwischen 1 mm und 10 mm gewählt ist.

8. Vorrichtung nach einem der Ansprüche 1 bis 7, **dadurch gekennzeichnet, dass** die Drähte (16) an ihren freien Enden geschärft ausgebildet sind.

9. Vorrichtung nach einem der Ansprüche 1 bis 8, **dadurch gekennzeichnet, dass** an das Gehäuse (2) zusätzliche Öffnungen für den Eintrag von Reinigungsflüssigkeiten oder gasförmigen Medien anschließen.

10. Vorrichtung nach einem der Ansprüche 1 bis 9, **dadurch gekennzeichnet, dass** die an das Gehäuse (2) anschließenden Leitungen (6) mittels pneumatischer Ventile verschließbar sind.

11. Vorrichtung nach einem der Ansprüche 1 bis 10, **dadurch gekennzeichnet, dass** die Austragsöffnung (7) mittels eines verschiebbaren Verschlussglieds (9) verschließbar ist.

12. Vorrichtung nach einem der Ansprüche 1 bis 11, **dadurch gekennzeichnet, dass** der Rotor (4) zu Drehzahlen von 300-1500 Umin⁻¹, bevorzugt 500-1000 Umin⁻¹ und insbesondere bevorzugt 700 Umin⁻¹ antreibbar ist.

13. Vorrichtung nach einem der Ansprüche 1 bis 12, **dadurch gekennzeichnet, dass** der Rotor (4) innen oder seitlich angeordnete Flügel zum Ansaugen von Luft durch zumindest eine im Gehäuse angeordnete Öffnung aufweist.

14. Vorrichtung nach einem der Ansprüche 1 bis 13, **dadurch gekennzeichnet, dass** die Menge der angesaugten Luft mit einem Einlassregler einstellbar ist.

## Claims

1. An apparatus for introducing waste materials and/or alternative fuels into a clinker production plant, the apparatus comprising a tubular housing (2) with a rotor (4) that is mounted so as to be rotatable substantially concentrically with the tube axis (3) and drivable for rotation and has a plurality of beating elements (5) arranged about the circumference of the rotor (4), wherein at least one line (6) for feeding the waste materials and/or alternative fuels and a discharge opening are connected to the housing (2) transversely to the axis of rotation (3) of the rotor (4), **characterized in that** the beating elements (5) are formed as rows (17) of wires (16).

2. An apparatus according to claim 1, **characterized in that** the beating elements are formed as rows (17) of wires (16) extending in parallel to the axis of rotation (3) of the rotor (4).

3. An apparatus according to claim 1 or 2, **characterized in that** the wires (16) of a row (17) are disposed immediately adjacent to each other.

4. An apparatus according to claim 1, 2 or 3, **characterized in that** the wires (16) have identical radial extensions from the circumference of the rotor (4).

5. An apparatus according to any one of claims 1 to 4, **characterized in that** the wires (16) are arranged about the circumference of the rotor (4) at an angle deviating from the direction of the radius of the rotor (4).

6. An apparatus according to any one of claims 1 to 5, **characterized in that** the angle of inclination of the wires (16) is selected to be between 5° and 15° in the direction of rotation.

7. An apparatus according to any one of claims 1 to 6, **characterized in that** the diameter of the wires (16) is selected to be between 1 mm and 10 mm.

8. An apparatus according to any one of claims 1 to 7, **characterized in that** the wires (16) are designed to be sharpened on their free ends.

9. An apparatus according to any one of claims 1 to 8, **characterized in that** additional openings for introducing flushing liquids or gaseous media are connected to the housing (2).

10. An apparatus according to any one of claims 1 to 9, **characterized in that** the lines (6) connected to the housing (2) are closeable by means of pneumatic valves.

11. An apparatus according to any one of claims 1 to 10, **characterized in that** the discharge opening (7) is closeable by a movable closing member (9).

12. An apparatus according to any one of claims 1 to 11, **characterized in that** the rotor (4) can be driven to speeds of 300-1500 rpm⁻¹, preferably 500-1000 rpm⁻¹, and particularly preferably 700 rpm⁻¹.

13. An apparatus according to any one of claims 1 to 12, **characterized in that** the rotor (4) comprises inwardly or laterally arranged blades for sucking in air through at least one opening provided in the housing.

14. An apparatus according to any one of claims 1 to 13, **characterized in that** the amount of sucked-in air is adjustable by an inlet control member.

## Revendications

1. Dispositif d'introduction de déchets et/ou d'autres combustibles dans une installation de production de klinker, le dispositif comportant un carter tubulaire (2) présentant un rotor (4) logé de façon à pivoter de façon essentiellement concentrique par rapport à l'axe tubulaire (3) et pouvant être entraîné en rotation, avec plusieurs éléments battants (5) disposés sur la périphérie du rotor (4), dans lequel au niveau du carter (2) se raccorde au moins une conduite (6) destinée à amener les déchets et/ou autres combustibles et une ouverture de sortie perpendiculaire à l'axe de rotation (3) du rotor (4), **caractérisé en ce que** les éléments battants (5) sont conçus sous forme de rangées (17) de fils métalliques (16).

2. Dispositif selon la revendication 1, **caractérisé en ce que** les éléments battants sont conçus sous forme de rangées (17) de films (16) s'étendant parallèlement à l'axe de rotation (3) du rotor (4).

3. Dispositif selon la revendication 1 ou 2, **caractérisé en ce que** les fils (16) d'une rangée (17) sont disposés de façon directement adjacente les uns par rapport aux autres.

4. Dispositif selon la revendication 1, 2 ou 3, **caractérisé en ce que** les fils (16) présentent une extension radiale identique depuis la périphérie du rotor (4).

5. Dispositif selon l'une des revendications 1 à 4, **caractérisé en ce que** les fils (16) sont disposés au niveau de la périphérie du rotor (4) selon un angle qui s'écarte de la direction du rayon du rotor (4).

6. Dispositif selon l'une des revendications 1 à 5, **caractérisé en ce que** l'angle d'inclinaison des fils (16) est sélectionné entre 5° et 15° dans le sens de rotation.

7. Dispositif selon l'une des revendications 1 à 6, **caractérisé en ce que** le diamètre des fils (16) est sélectionné entre 1 et 10 mm.

8. Dispositif selon l'une des revendications 1 à 7, **caractérisé en ce que** les fils (16) sont de conception aiguisée au niveau de leurs extrémités libres.

9. Dispositif selon l'une des revendications 1 à 8, **caractérisé en ce qu'**au niveau du carter (2) se raccordent des ouvertures supplémentaires destinées à l'introduction de liquides de nettoyage ou de milieux gazeux.

10. Dispositif selon l'une des revendications 1 à 9, **caractérisé en ce que** les conduites (6) qui se raccordent au carter (2) peuvent être fermées au moyen de soupapes pneumatiques.

11. Dispositif selon l'une des revendications 1 à 10, **caractérisé en ce que** l'ouverture de sortie (7) peut être fermée au moyen d'un organe de fermeture (9) déplaçable.

12. Dispositif selon l'une des revendications 1 à 11, **caractérisé en ce que** le rotor (4) peut être entraîné à une vitesse de rotation comprise entre 300 et 1500 tours.min⁻¹, de préférence entre 500 et 1000 tours.min⁻¹ et de façon particulièrement préférée à 700 tours.min⁻¹.

13. Dispositif selon l'une des revendications 1 à 12, **caractérisé en ce que** le rotor (4) présente des ailettes disposées intérieurement ou latéralement et destinées à aspirer de l'air par au moins une ouverture ménagée dans le carter.

14. Dispositif selon l'une des revendications 1 à 13, **caractérisé en ce que** la quantité de l'air aspiré peut être réglée au moyen d'un mécanisme régulateur d'admission.
